# FASCICULE DE BREVET EUROPEEN

(11) **EP 2 949 584 B1**
(45) Date de publication et mention de la délivrance du brevet: **10.05.2017**
(21) Numéro de dépôt: 15169449.4
(22) Date de dépôt: 27.05.2015
(51) Int. Cl.: B65B 39/00, B65B 3/30, B67C 3/00

(54) **DISPOSITIF DE DISTRIBUTION ET ENSEMBLE DE TELS DISPOSITIFS DE DISTRIBUTION**
VERTEILUNGSVORRICHTUNG UND EINHEIT, DIE AUS SOLCHEN VERTEILUNGSVORRICHTUNGEN BESTEHT
DISPENSING DEVICE AND ASSEMBLY OF SUCH DISPENSING DEVICES

(30) Priorité: 28.05.2014 FR 1454896
(43) Date de publication de la demande: 02.12.2015
(73) Titulaire: PCM Technologies, 92300 Levallois-Perret (FR)
(72) Inventeur: Thomas, Jérémy, 49400 Saumur (FR); Brule, Manuel, 49620 La Pommeraye (FR)
(74) Mandataire: Cabinet Plasseraud

(56) Documents cités:
- EP-A1- 0 271 242
- EP-A1- 0 401 510
- EP-A1- 0 742 147
- DE-A1- 19 730 037
- DE-C1- 3 943 149
- US-A- 5 524 683

## Description

L'invention concerne un dispositif de distribution de produit apte à l'écoulement tel que, par exemple, des produits pâteux ou liquide ou des grains, et un ensemble de tels dispositifs de distribution.

L'invention concerne également un ensemble comprenant au moins deux dispositifs de distribution.

Il est connu des dispositifs de distribution du type comportant un châssis comprenant notamment une platine de support monté sur des pieds et une platine porte-obturateurs propre à se déplacer par rapport à la platine de support. La platine de support porte, sur sa face supérieure, un unique bloc de guidage comprenant des orifices de guidage et, sur sa face inférieure, des buses de distribution. La platine porte-obturateurs supporte des obturateurs.

Les buses de distribution sont constituées par un corps de buse propre à distribuer le produit à distribuer, et un canal d'admission raccordé au corps de buse. Les obturateurs sont propres à se déplacer dans les buses de distribution entre une position dans laquelle ils obturent le canal d'admission et une position dans laquelle le canal d'admission communique avec le corps de buse. Les orifices de guidage guident les obturateurs lors de leur déplacement. Le bloc de guidage comporte en outre des chambres de nettoyage et de lubrification des obturateurs. Ces chambres sont connectées entre elles à l'aide de tuyaux de raccord externes.

Le bloc de guidage est fixé à la platine de support à l'aide d'au minimum une vis et un moyen de blocage, ou de plusieurs vis. Lorsque le bloc de guidage fuit, il est nécessaire de démonter l'ensemble de la platine de support afin de dégager le bloc de guidage. Une fois le bloc de guidage démonté, la détection de fuite est malaisée.

Le document DE 19730037 décrit un dispositif de distribution selon le préambule de la revendication 1.

Le but de la présente invention est de proposer un dispositif de distribution plus facile à démonter, dans lequel la détection de fuite est améliorée. Un autre but de l'invention est de proposer un dispositif de distribution compacte.

A cet effet, l'invention a pour objet un dispositif de distribution de produit apte à l'écoulement, ledit dispositif de distribution comprenant :
- un châssis comprenant une platine de support ; et
- au moins un premier et un deuxième obturateurs portés par le châssis, le premier et le deuxième obturateurs étant propres à autoriser ou interdire l'écoulement du produit ;
- un premier bloc de guidage porté par la platine de support, ledit premier bloc de guidage comportant un trou de guidage apte à guider le premier obturateur, et un canal de passage d'un fluide d'entretien communicant avec le trou de guidage, caractérisé en ce qu'il comporte en outre :
- un deuxième bloc de guidage porté par la platine de support, ledit deuxième bloc de guidage étant isolé du premier bloc de guidage, le deuxième bloc de guidage comportant un trou de guidage apte à guider le deuxième obturateur, et un canal de passage du fluide d'entretien, et
- un raccord porté par la platine de support, ledit raccord étant apte à connecter de manière étanche le canal du premier bloc de guidage au canal du deuxième bloc de guidage pour permettre le passage du fluide d'entretien.

Cette invention simplifie la maintenance du dispositif de distribution. En effet, en cas de détérioration d'un joint d'étanchéité, la détermination du joint d'étanchéité détérioré est simplifiée puisqu'il suffit de rechercher sur la platine de support l'endroit d'où provient la fuite. Le démontage du joint d'étanchéité détérioré est accéléré car il suffit de démonter le bloc de guidage qui comporte le joint d'étanchéité qui fuit.

Suivant des modes particuliers de réalisation, le dispositif de distribution comporte l'une ou plusieurs des caractéristiques suivantes :
- Le canal du premier bloc de guidage débouche sur une face, dite face d'application, qui s'étend dans un plan sensiblement parallèlement à la platine de support.

Avantageusement, la connexion entre le raccord et le bloc de guidage est réalisée selon un plan horizontal. Ce qui permet de fixer le raccord au bloc de guidage sans imposer des tolérances drastiques sur le dimensionnement et le positionnement du raccord et du bloc de guidage.
- Au moins une partie du premier bloc de guidage est en appui sur au moins une partie d'une face de base du raccord, ledit raccord comportant une conduite ayant une première ouverture qui débouche sur ladite au moins une partie de la face de base.

Avantageusement, ce montage est compact.

Avantageusement, le raccord est maintenu en position, lors de la phase de montage par la pression exercée sur celui-ci par les deux blocs de guidage adjacents au raccord.
- Le dispositif de distribution comporte un raccord additionnel ayant une face de base ; l'autre partie du premier bloc de guidage étant en appui sur au moins une partie de la face de base du raccord additionnel, ladite conduite ayant une deuxième ouverture qui débouche sur ladite au moins une partie de la face de base dudit raccord additionnel.
- Le dispositif de distribution comporte au moins une première et une deuxième buses de distribution portées par la platine de support, chaque buse de distribution comportant un corps de buse propre à distribuer le produit et un canal d'admission raccordé au corps de buse ;
et dans lequel la platine de support comporte des orifices munis d'un épaulement, la première et la deuxième buses de distribution étant emmanchées dans lesdits orifices, et
le premier bloc de guidage étant fixé à la première buse de distribution par au moins un élément de fixation ; la première buse de distribution étant en butée contre ledit épaulement de la platine de support ; le raccord étant coincé entre le premier bloc de guidage, la première buse de distribution et la platine de support.

Ainsi, le nombre d'éléments de fixation à démonter est avantageusement diminué.
- Le dispositif de distribution comprend au moins un dispositif d'étanchéité interposé entre le raccord et le premier bloc de guidage, et dans lequel au moins une face parmi la face du bloc de guidage en appui sur le raccord et la face de base, comprend une rainure circulaire dans laquelle ledit dispositif d'étanchéité siège, le dispositif d'étanchéité étant comprimé par ledit au moins un élément de fixation.

Avantageusement, le dispositif d'étanchéité est comprimé, d'une part, par le poids du bloc de guidage et, d'autre part, par le dispositif de fixation du bloc de guidage à la buse de distribution.
- Le dispositif de distribution comprend deux éléments de fixation du premier bloc de guidage à la première buse de distribution, et dans lequel le canal du premier bloc de guidage comporte une voie d'amenée et une voie d'évacuation qui débouchent, de part et d'autre, du trou de guidage, le long d'une diagonale de la face d'application, et dans lequel les deux éléments de fixation sont disposés, de part et d'autre, du trou de guidage, le long d'une deuxième diagonale de ladite face d'application.

Avantageusement, ce montage est compact et stable.
- Chaque obturateur comprend au moins une portion supérieure, une gorge destinée à recevoir une cale de fixation, et une portion inférieure séparée de la portion supérieure par ladite gorge, et dans lequel le diamètre de la portion supérieure est inférieur ou égal au diamètre de la portion inférieure.

Avantageusement, cette caractéristique permet de démonter ou de monter les obturateurs en les faisant passer par le dessous du dispositif de distribution par coulissement des obturateurs au travers des trous de guidage et des buses de distribution.
- Le dispositif de distribution comporte un dispositif d'étanchéité statique agencé entre le premier bloc de guidage et la première buse de distribution.

Avantageusement, ce dispositif d'étanchéité est facilement accessible puisqu'il suffit de démonter le premier bloc de guidage pour y accéder.
- Le corps de buse comporte un orifice central muni d'un épaulement intérieure, le premier bloc de guidage comprenant une face d'extrémité inférieure en appui sur ledit épaulement intérieur, et dans lequel au moins une face parmi une face de l'épaulement intérieur et la face d'extrémité inférieure, est pourvue d'une gorge, le dispositif d'étanchéité statique siégeant dans ladite gorge.

Avantageusement, le premier bloc de guidage comprime ce joint d'étanchéité statique lorsque le premier bloc de guidage est fixé à la première buse de distribution.
- Le premier bloc de guidage est identique au deuxième bloc de guidage.

Ainsi, le premier bloc de guidage et le deuxième bloc de guidage sont interchangeables. Les blocs de guidage peuvent être fabriqués en série à un faible coût.
- Le raccord comporte un passage de fluide ayant une forme générale en U.
- Le raccord est réalisé en élastomère.
- Les trous de guidage s'étendent selon un axe principal et ledit canal comporte au moins une section s'étendant parallèlement à l'axe principal et une section s'étendant selon une direction faisant un angle prédéfini avec ledit axe principal ; ledit angle prédéfini étant compris entre 55° et 85°.
- La platine de support et le raccord comprennent, l'un, au moins un relief de positionnement et, l'autre, au moins un relief de positionnement de forme complémentaire.

Ce dispositif permet de maintenir en position le raccord par rapport à la platine de support, lors des phases d'assemblage ou de démontage des blocs de guidage ou des buses de distribution.
- Le trou de guidage du premier bloc de guidage comprend au moins un resserrement pourvu d'une gorge, et le premier bloc de guidage comporte au moins un dispositif d'étanchéité dynamique agencé dans ladite gorge et propre à assurer l'étanchéité entre le premier obturateur et le premier bloc de guidage.

Avantageusement, les dispositifs d'étanchéité dynamique inférieur et supérieur peuvent être facilement démontés par le seul démontage de l'élément de fixation du premier bloc de guidage à la première buse de distribution.

Avantageusement, le dispositif d'étanchéité inférieur assure une étanchéité dynamique entre l'espace interne du trou de guidage et la première buse de distribution, et le dispositif d'étanchéité supérieur assure une étanchéité dynamique entre l'espace interne du trou de guidage et l'extérieur du premier bloc de guidage.
- La face d'application du premier bloc de guidage comporte un relief d'aide au montage.

Pour être sûre de bien vider la chambre de nettoyage et/ou de lubrification, il est souhaitable que le bloc de guidage soit monté avec sa voie d'amenée dirigée du côté du bloc d'entrée et sa voie d'évacuation dirigée du côté du bloc de sortie. Comme le bloc de guidage est symétrique, le relief d'aide au montage permet avantageusement de distinguer la face d'application sur laquelle débouche la voie d'évacuation.
- Les sont agencés selon 2n rangées avec n entier naturel supérieur à 1, les obturateurs (de n rangée(s) étant déplacés par un premier actionneur et les obturateurs des n rangées suivantes étant déplacés par un autre actionneur indépendant dudit premier actionneur.

Avantageusement, ce dispositif de distribution peut être utilisé pour remplir indifféremment 2n ou n rangées de produit. Dans le dernier cas, seules deux rangées de buses de distribution parmi les quatre, sont utilisées.

Avantageusement, ce dispositif de distribution peut être utilisé pour remplir les n premières rangées avec un premier produit, par exemple du yaourt, et les n rangées suivantes avec un autre produit, par exemple de la mousse. Dans ce cas, le tapis du convoyage est déplacé d'une distance correspondant à la distance entre la première rangée et la troisième rangée de buse de distribution, à chaque cycle de remplissage.

L'invention concerne également un ensemble de dispositifs de distribution caractérisé en ce qu'il comporte au moins un premier dispositif de distribution et un deuxième dispositif de distribution conformés selon l'une quelconque des revendications 1 à 18, dans lequel l'entraxe entre les obturateurs du premier dispositif de distribution est différent de l'entraxe entre les obturateurs du deuxième dispositif de distribution et dans lequel les blocs de guidage du premier dispositif de distribution sont identiques aux blocs de guidage du deuxième dispositif de distribution.

Avantageusement, le dispositif de distribution selon l'invention est modulaire. Les mêmes blocs de guidage et les mêmes buses de distribution peuvent être montés sur des dispositifs de distribution différents. En particulier, ils peuvent être montés sur des dispositifs de distribution ayant des platines de support différentes et dont l'entraxe entre les obturateurs est différent. Seuls la platine de support, la platine de propreté, les raccords et la platine porte-obturateurs sont à adapter en fonction des contenants du produit à distribuer. Cette modularité diminue les coûts de fabrication des dispositifs de distribution et permet à l'utilisateur d'utiliser une grande partie des éléments d'un dispositif de distribution pour un autre dispositif de distribution.

L'invention sera mieux comprise à la lecture de la description qui va suivre, donnée uniquement à titre d'exemple et faite en se référant aux figures sur lesquelles :
- la figure 1 est une vue en perspective du dispositif de distribution selon l'invention ;
- la figure 2 est une vue de face du dispositif de distribution illustré sur la figure 1 ;
- la figure 3 est une vue de côté du dispositif de distribution illustré sur la figure 1 ;
- la figure 4 est une vue en coupe horizontale selon un plan de coupe IV-IV du dispositif de distribution illustré sur la figure 1, le plan de coupe IV-IV étant illustré sur la figure 3 ;
- les figures 5 à 8 sont des vues en coupe verticale selon des plans de coupe V-V, VI-VI, VII-VII et VIII-VIII du dispositif de distribution illustré sur la figure 1, les plans de coupe V-V, VI-VI, VII-VII et VIII-VIII étant illustrés sur la figure 4 ;
- la figure 9 est une vue en perspective d'un bloc de guidage utilisé dans le dispositif de distribution illustré sur la figure 1 ;
- la figure 10 est une vue de dessous du bloc de guidage illustré sur la figure 9;
- les figures 11 et 12 sont des vues en coupe verticale selon des plans de coupe XI-XI, XII-XII du bloc de guidage illustré sur la figure 9, les plans de coupe XI-XI, XII-XII étant illustrés sur la figure 10 ;
- la figure 13 est un agrandissement d'une partie de la vue en coupe verticale du bloc de guidage illustré sur la figure 12 ;
- la figure 14 est une vue en perspective du raccord utilisé dans le dispositif de distribution illustré sur la figure 1 ;
- la figure 15 est une vue de dessous du raccord illustré sur la figure 14 ainsi que d'une partie des blocs de guidage et des vis en pointillés ;
- la figure 16 est une vue en coupe selon le plan de coupe XVI-XVI du raccord illustré sur la figure 14 ; le plan de coupe XVI-XVI étant représenté sur la figure 15 ;
- la figure 17 est une vue en coupe selon le plan de coupe XVII-XVII d'une partie d'une platine porte-obturateurs du dispositif de distribution illustré sur la figure 1, le plan de coupe XVII-XVII étant illustré sur la figure 1.

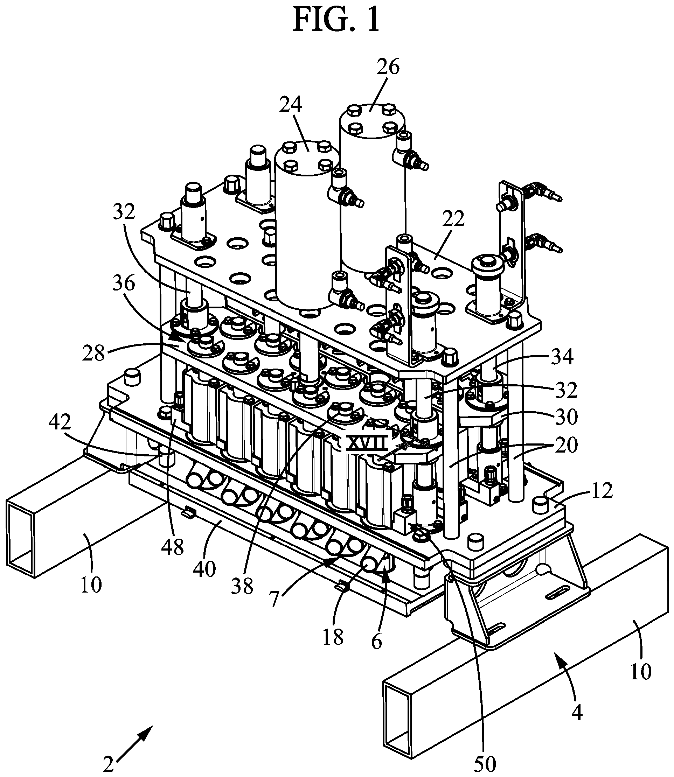

Dans la description qui va suivre, les termes « haut », « bas », « inférieur », « supérieur », « horizontal », « vertical », « droite » et « gauche » sont définis lorsque le dispositif de distribution selon l'invention est disposé comme illustré sur la figure 1, et ne sont nullement limitatifs.

Le dispositif de distribution selon l'invention est généralement appelé plaque porte-buses. Il est propre à distribuer des produits aptes à l'écoulement dans des contenants. Les produits aptes à l'écoulement sont, par exemple, des produits pâteux ou liquides ou des grains. Les contenants peuvent être conditionnés dans des paquets dans lesquels les contenants sont agencés selon une ou plusieurs rangées.

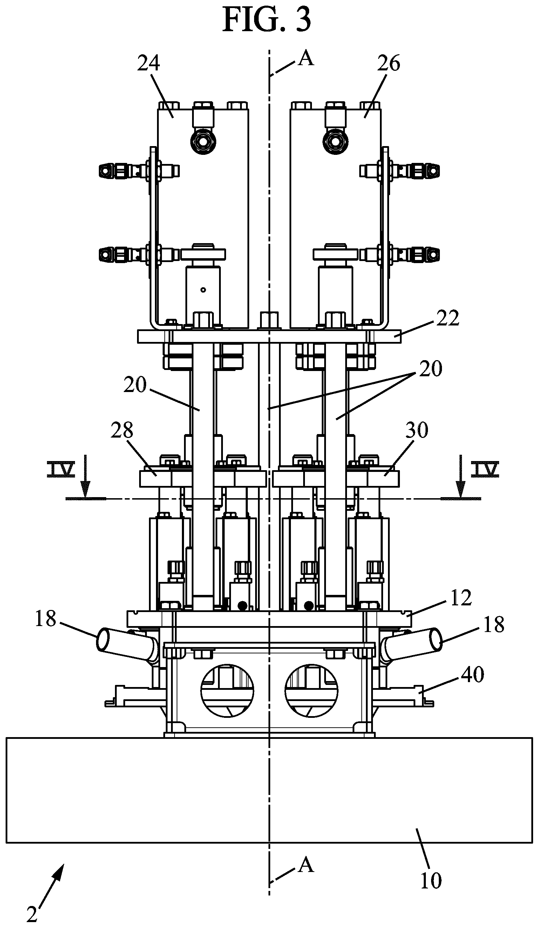

Les figures 1 à 17 représentent un exemple de dispositif de distribution selon l'invention propre à remplir un paquet de deux ou quatre rangées de six contenants. Néanmoins, le dispositif de distribution selon l'invention peut être mis en oeuvre pour distribuer des produits dans des contenants isolés ou peut être adapté pour remplir des contenants agencés selon des paquets ayant un nombre quelconque de rangées et pour un nombre quelconque de contenants par rangée.

En référence aux figures 1 à 4, le dispositif de distribution 2 selon l'invention est du type comportant un châssis 4, des buses de distribution 6, 7 et des obturateurs 8, 9 portés par le châssis 4.

Le châssis 4 est constitué par deux pieds 10 et une platine de support 12 montée sur les deux pieds 10. Le châssis 4 présente sensiblement la forme d'une arche. Il est destiné à être disposé au-dessus d'un tapis de convoyage portant les contenants à remplir. Les contenants sont, par exemple, des pots de yaourt.

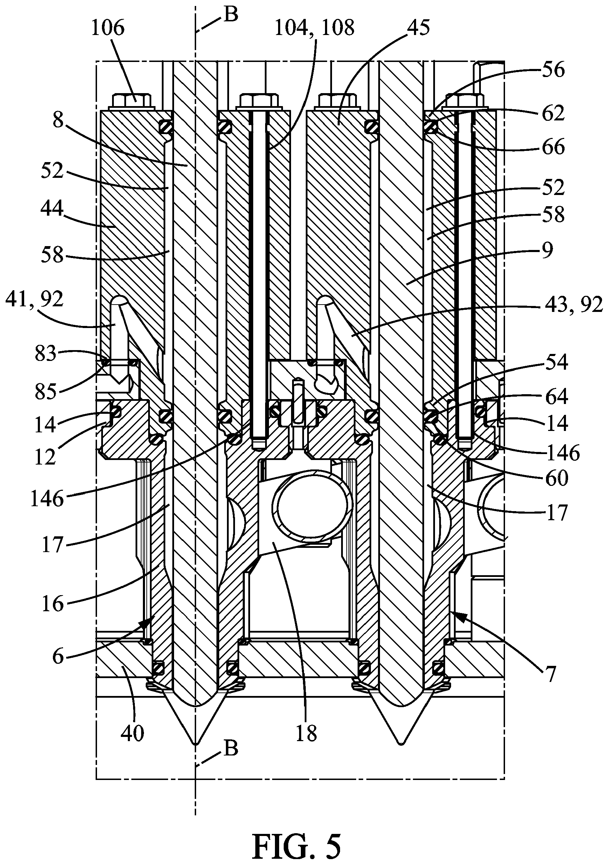

En référence à la figure 5, les buses de distribution 6, 7 sont emmanchées dans des orifices 14 de la platine de support 12, chaque buse de distribution 6, 7 comportant un corps de buse 16 propre à distribuer le produit à répandre, et un canal d'admission 18, généralement appelé nez de buse, raccordé au corps de buse 16.

Les obturateurs 8, 9 sont constitués par des tiges qui s'étendent selon un axe principal B-B. Ils sont propres à se déplacer dans les buses de distribution 6, 7 entre une position dans laquelle ils obturent le canal d'admission 18 et une position dans laquelle le passage entre le canal d'admission 18 et le corps de buse 16 est libéré pour autoriser l'écoulement du produit.

Le corps de buse 16 présente la forme générale d'un manchon muni d'un trou central 17.

En référence aux figures 1 à 4, le dispositif de distribution 2 comporte des montants supérieurs 20 fixés aux quatre coins de la platine de support 12 ainsi que le long d'un axe longitudinal médian A-A de celle-ci, et une platine porte-actionneurs 22 portée par les montants supérieurs 20.

La platine porte-actionneurs 22 supporte deux actionneurs 24, 26, par exemple, deux vérins. Les deux actionneurs 24, 26 sont indépendants l'un de l'autre c'est-à-dire qu'ils peuvent être commandés pour réaliser des mouvements différents.

Le dispositif de distribution 2 comprend en outre deux platines porte-obturateurs 28, 30 agencées entre la platine de support 12 et la platine porte-actionneurs 22, et des colonnes de guidage 32, 34 autour desquelles les deux platines porte-obturateurs 28, 30 sont propres à coulisser pour déplacer les obturateurs 8 par rapport aux buses de distribution 6, 7.

Les platines porte-obturateurs 28, 30 s'étendent parallèlement à la platine de support 12, chacune, sur une moitié de la surface du plan principal de la platine de support 12. Une platine porte-obturateurs 28, dite platine porte-obturateurs avant, s'étend d'un côté de l'axe longitudinal médian A-A du dispositif. L'autre platine porte-obturateurs 30, dite platine porte-obturateurs arrière, s'étend de l'autre côté de l'axe longitudinal médian A-A.

Les platines porte-obturateurs 28, 30 portent, chacune deux rangées 36 d'obturateurs 8, 9.

La platine porte-obturateurs avant 28 est entraînée en déplacement par un actionneur 22 et la platine porte-obturateurs arrière 30 est entraînée en déplacement par l'autre actionneur 24 de sorte que les mouvements des deux platines porte-obturateurs peuvent être dé-corrélés, si le fabricant de produit le souhaite. Cette fonctionnalité peut, par exemple, être utilisée pour remplir des contenants des deux premières rangées d'un premier produit et remplir les contenants des deux dernières rangées d'un autre produit.

Les colonnes de guidage 32, 34 sont fixées à la platine de support 12 et à la platine porte-actionneurs 22. Deux colonnes de guidage avant 32 sont, par exemple, disposées aux extrémités de la platine porte-obturateurs avant 28 et deux colonnes de guidage arrière 34 sont disposées aux extrémités de la platine porte-obturateurs arrière 30.

Le dispositif de distribution 2 comporte en outre une platine de propreté 40 qui s'étend parallèlement et en dessous de la platine de support 12. La platine de propreté 40 est fixée à la platine de support 12 par des montants inférieurs 42 disposés aux quatre coins de la platine de support 12 et le long de l'axe longitudinal médian A-A.

Le dispositif de distribution 2 comporte de plus des blocs de guidage 44, 45 adaptés pour guider des obturateurs 8, 9, et contenant chacun un canal 41, 43 de passage d'un fluide d'entretien destiné à l'entretien des obturateurs 8, 9, des raccords 46, 47 permettant le passage du fluide d'entretien d'un bloc de guidage 44 au bloc de guidage suivant 45, des blocs d'entrée 48 et des blocs de sortie 50 du fluide d'entretien.

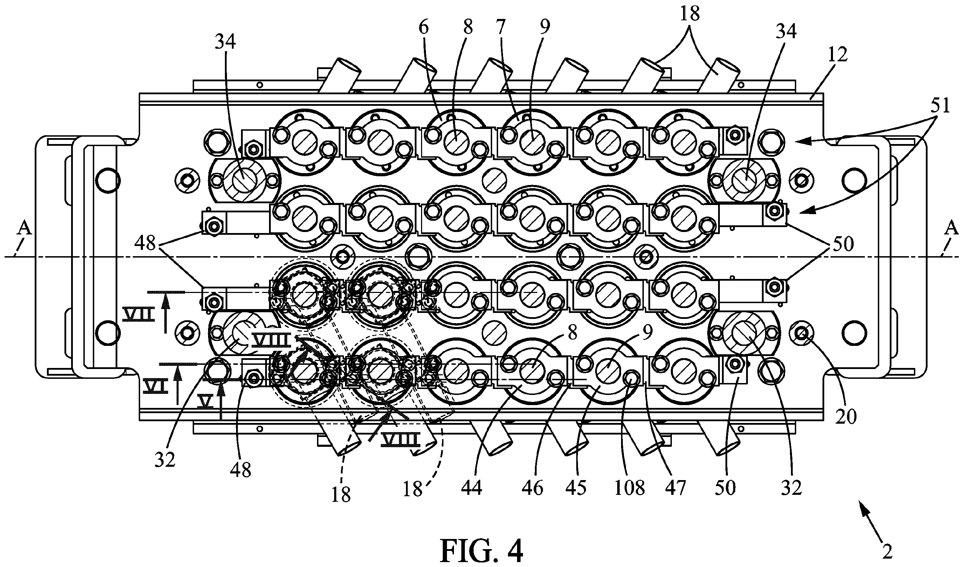

Comme visible sur la figure 4, les blocs de guidage 44, 45 sont répartis selon quatre rangées 51 agencées au droit des deux rangées de chaque platine porte-obturateurs.

Les raccords 46, 47 sont disposés, dans chaque rangée 51, entre deux blocs de guidage 44, 45 adjacents. Les blocs d'entrée 48 sont agencés à une extrémité de chaque rangée 51 et les blocs de sortie 50 sont agencés à l'autre extrémité de chaque rangée 51.

Les canaux 41, 43 des blocs de guidage 44, 45, les raccords 46, 47, le bloc d'entrée 48 et le bloc de sortie 50 de chaque rangée 51 constituent un circuit de fluide pour le fluide d'entretien. Le fluide d'entretien est constitué soit par un fluide de nettoyage à base d'eau et de produit de nettoyage destiné à nettoyer les obturateurs 8, 9, ou de vapeur, soit d'un lubrifiant destiné à lubrifier les joints dynamiques 64, 66.

En pratique, le circuit de fluide est généralement parcouru par du lubrifiant. Néanmoins, une fois par jour ou lorsque le fabricant souhaite changer le produit à déverser dans les contenants, le circuit de fluide est parcouru par le fluide de nettoyage.

Les blocs d'entrée 48 et les blocs de sortie 50 comprennent un tuyau de circulation de lubrifiant, un tuyau de circulation de fluide de nettoyage, un embranchement et des vannes non représentés.

Les blocs de guidage 44, 45 comprennent chacun un unique trou de guidage 52 propre à recevoir un unique obturateur 8, 9. Les blocs de guidage 44, 45 sont séparés les uns des autres. Ils sont autonomes. Il est possible de réaliser un dispositif de distribution en disposant un nombre quelconque de bloc de guidage dans une rangée 51.

Comme visible sur la figure 5, chaque bloc de guidage 44, 45 est monté sur une buse de distribution 6, 7. Chaque bloc de guidage 44, 45 comporte un trou de guidage 52 disposé au droit du corps de buse 16, et logeant un obturateur 8, 9.

Le trou de guidage 52 comporte un resserrement 54 dans sa partie basse et un resserrement 56 dans sa partie haute. L'espace disposé entre les resserrements 54, 56, forme une chambre 58 de nettoyage et/ou de lubrification de l'obturateur 8, 9.

Les resserrements 54, 56 sont pourvus d'une gorge 60, 62 contenant un joint d'étanchéité dynamique 64, 66. Le joint d'étanchéité dynamique 64 situé dans le resserrement inférieur assure l'étanchéité entre la chambre 58 et le corps de buse 16. Le joint d'étanchéité dynamique 66 situé dans le resserrement supérieur assure l'étanchéité entre la chambre 58 et l'espace extérieur du dispositif de distribution 2.

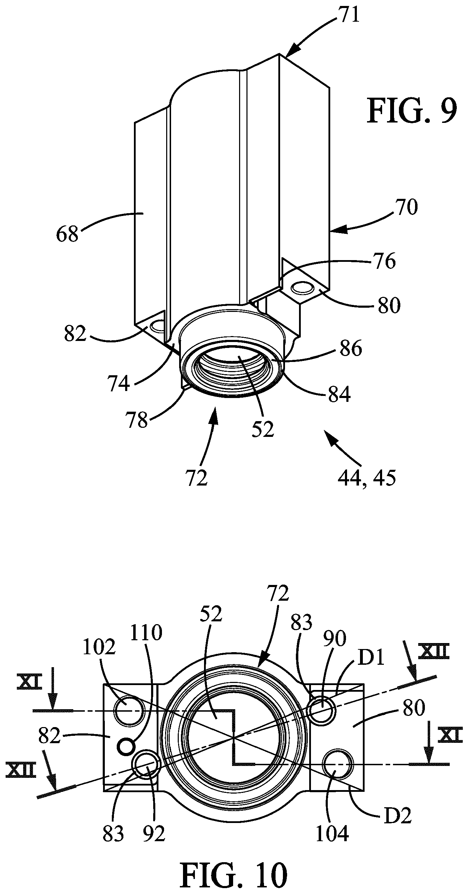

En référence à la figure 9, chaque bloc de guidage 44, 45 présente sensiblement la forme d'un pavé droit. Chaque bloc de guidage 44, 45 présente notamment une face avant 68 et une face arrière 70 ainsi qu'une face supérieure 71 et une face inférieure 72 traversées par le trou de guidage 52.

Dans le mode de réalisation représenté, une portion de la face avant 68 et une portion de la face arrière 70 du bloc de guidage qui entourent le trou de guidage 52 sont bombées.

La face inférieure 72 du bloc de guidage, dite face d'application, comprend une extension 74 prolongeant le trou de guidage 52, deux talons 76, 78 d'aide au positionnement des raccords 46, 47, une première face latérale d'application 80 et une deuxième face latérale d'application 82, disposées de part et d'autre de l'extension 74. La première face latérale d'application 80 et la deuxième face latérale d'application 82 s'étendent dans un plan sensiblement parallèle au plan de la platine de support 12.

L'extension 74 comporte un épaulement 75 qui repose sur la face supérieure de la buse de distribution.

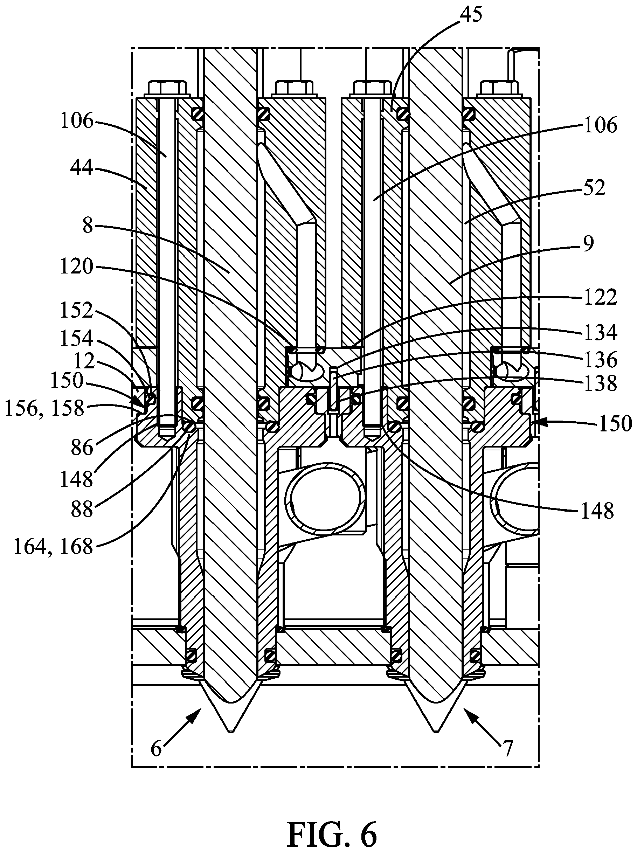

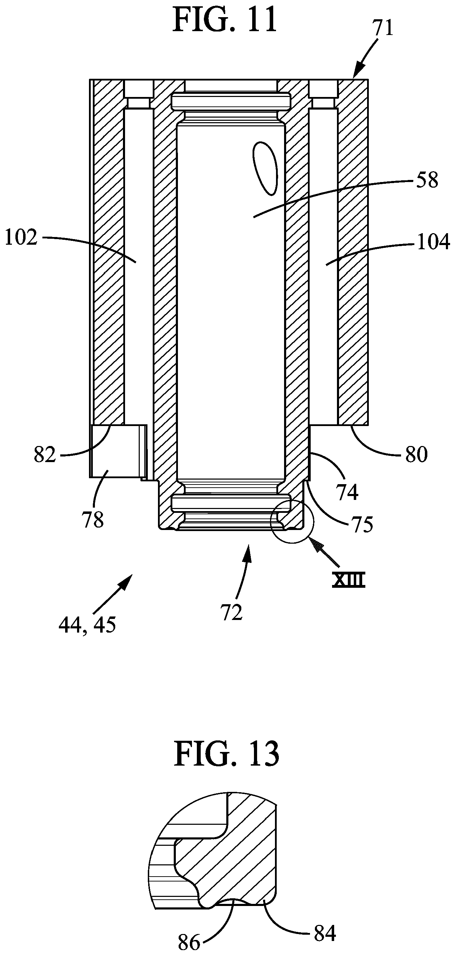

Comme visible sur les figures 6 et 13, la face inférieure 84 de l'extension est pourvue d'une gorge 86. Un dispositif d'étanchéité statique 88 de type joint circulaire est agencé dans cette gorge 86.

Un talon 76 s'étend le long de la première face d'application 80 dans un plan vertical prolongeant la face avant 68. L'autre talon 78 s'étend le long de la deuxième face d'application 82 dans un plan vertical prolongeant la face arrière 70.

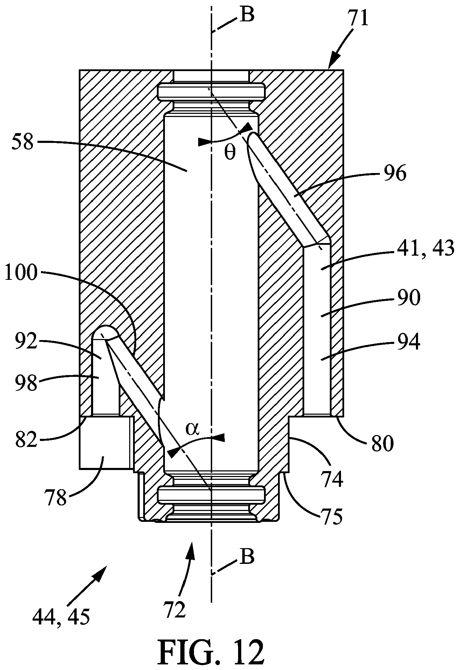

Comme visible sur les figures 10 et 12, le canal 41 du bloc de guidage est constitué par deux parties. Une partie, appelée, voie d'amenée 90, relie la première face d'application 80 à une partie supérieure de la chambre 58. Le liquide d'entretien est amené à la chambre par cette voie d'amenée. L'autre partie, appelée voie d'évacuation 92 relie la deuxième face d'application 82 à une partie inférieure de la chambre 58. Le liquide d'entretien est évacué de la chambre par cette voie d'évacuation, comme visible sur les figures 5 et 10.

La première face d'application 80 et la deuxième face d'application 82 sont pourvues d'une rainure circulaire 83 bordant la voie d'amenée 90 et respectivement la voie d'évacuation 92. Les rainures circulaires 83 sont aptes à réceptionner un dispositif d'étanchéité statique 85, de type joint circulaire.

La voie d'amenée 90 est constituée par deux sections rectilignes. Une première section 94 s'étend selon l'axe principal B-B et débouche sur la première face d'application 80. Une deuxième section 96 s'étend selon un axe faisant un angle prédéfini θ avec l'axe principal B-B et débouche au niveau de la portion supérieure de la chambre 58. Cet angle prédéfini θ est, par exemple, compris entre 55° et 85 °.

Avantageusement, cette configuration permet de percer la deuxième section 96 du canal à l'aide d'un outil passant dans le trou de guidage 52. Le bloc de guidage 44, 45 est réalisé d'un seul tenant. Il ne comprend pas de bouchon.

De la même façon, la voie d'évacuation 92 est réalisée par deux sections rectilignes. Une première section 98 s'étend selon l'axe principal B-B et débouche sur la deuxième face d'application 82. Une deuxième section 100 s'étend selon un axe faisant un angle prédéterminé α avec l'axe principal B-B et débouche au niveau de la portion inférieure de la chambre 58.

Enfin, la voie d'amenée 90 s'étend dans un plan parallèle à la face avant 68. La voie d'évacuation 92 s'étend également dans un plan parallèle à la face avant 68 mais distinct et distant du plan contenant la voie d'amenée 90. En particulier, lorsque l'on considère la face inférieure 72 du bloc de guidage 44, 45 dans son ensemble, la voie d'amenée 90 et la voie d'évacuation 92 débouchent, de part et d'autre du trou de guidage 52, sensiblement le long d'une première diagonale D1 de la face d'application 72.

Le bloc de guidage 44, 45 comprend également deux trous de fixation 102, 104 traversés chacun par une vis de fixation 106, 108 pour fixer le bloc de guidage 44 à la buse de distribution 6 disposée en dessous de celui-ci. Les trous de fixation 102, 104 et les vis de fixation 106, 108, formant des éléments de fixation, s'étendent parallèlement à l'axe principal B-B. Lorsque la face inférieure 72 du bloc de guidage 44, 45 est considérée dans son ensemble, les deux trous de fixation 102, 104 débouchent, de part et d'autre du trou de guidage 52, sensiblement le long d'une deuxième diagonale D2 la face d'application 72.

Avantageusement, ce montage permet de réaliser un dispositif de distribution compact et stable.

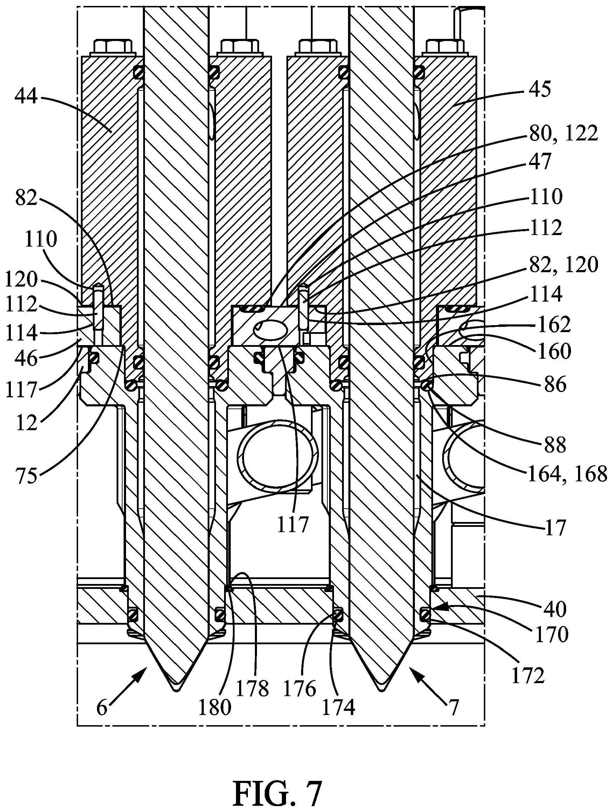

Enfin, la deuxième face d'application 82 du bloc de guidage comprend un relief d'aide au montage. Selon le mode de réalisation représenté, ce relief d'aide au montage, visible sur les figures 7 et 10, est constitué par une goupille 112 et un orifice 110 recevant une extrémité de la goupille 112. L'autre extrémité de la goupille 112 est logée dans un orifice 114 pratiqué sur une face de base 116 du raccord.

Le relief d'aide au montage permet avantageusement de distinguer la deuxième face d'application 82 sur laquelle débouche la voie d'évacuation de la première face d'application 80 sur laquelle débouche la voie d'amenée. Ce relief d'aide au montage permet d'assurer que lors du montage du dispositif de distribution, le bloc de guidage 44, 45 est toujours positionné de manière à ce que la voie d'amenée 90 du bloc de guidage soit dirigée du côté du bloc d'entrée 48 et que la voie d'évacuation 92 du bloc de guidage soit dirigée du côté du bloc de sortie 50. Ce montage évite toute stagnation de fluide dans les chambres 58.

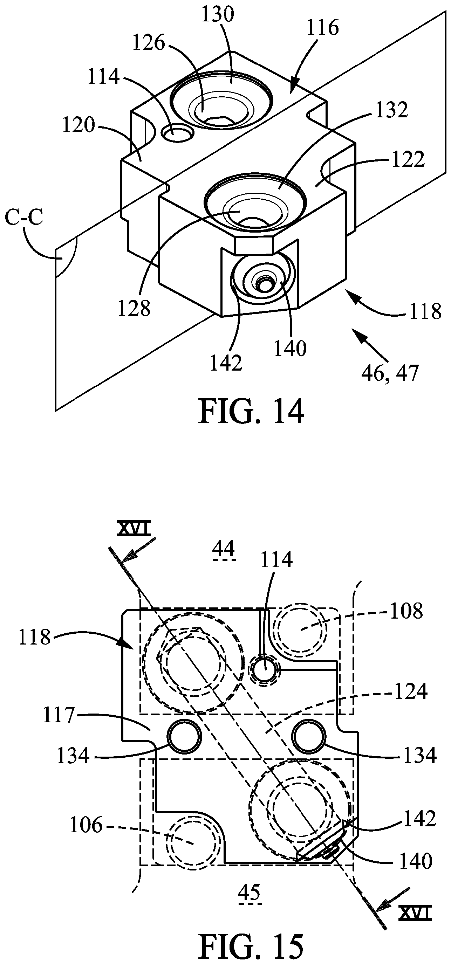

En référence aux figures 14 à 16, le raccord 46, 47 comprend une face supérieure de base 116 et une face inférieure 118 qui s'étendent dans un plan sensiblement parallèle à la platine de support 12.

Le premier bloc de guidage 44 repose sur une partie 120 de la face de base du raccord située d'un côté d'un plan médian C-C. Le deuxième bloc de guidage 45 repose sur une partie 122 de la face de base située de l'autre côté du plan médian C-C. Le plan médian C-C traverse une partie médiane du raccord 46, 47. Il s'étend perpendiculairement à la platine de support 12 et transversalement au dispositif de distribution 2.

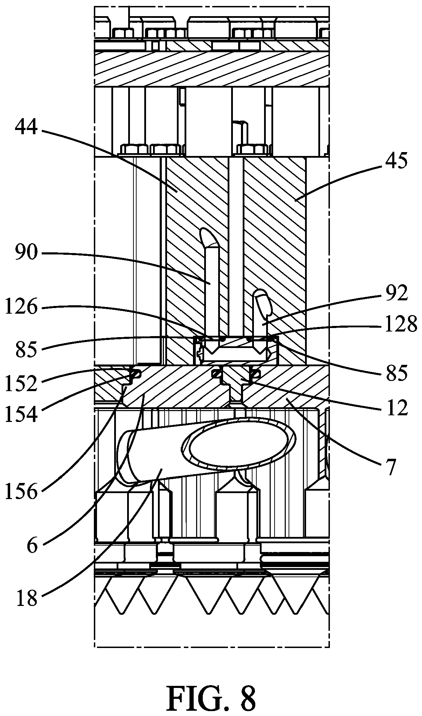

Comme visible sur les figures 8, 14 et 16, le raccord 46, 7 comporte une conduite 124 ayant une première ouverture 126 communicant avec la conduite d'amenée 90 d'un premier bloc de guidage 44, et une deuxième ouverture 128 communicant avec la conduite d'évacuation 92 d'un deuxième bloc de guidage 45 disposé à côté du premier bloc de guidage dans la rangée 51. La première ouverture 126 débouche sur une partie 120 de la face de base située d'un côté du plan médian C-C. La deuxième ouverture 128 débouche sur une partie 122 de la face de base située de l'autre côté du plan médian C-C.

La face de base 116 est munie de deux rainures circulaires 130, 132, chacune périphérique à une ouverture 126, 128 de la conduite. Chaque rainure circulaire 130 loge une partie d'un dispositif d'étanchéité statique 85. L'autre partie de ce dispositif d'étanchéité statique 85 siège dans la rainure circulaire 83 des blocs de guidage 44, 45. Avantageusement, les dispositifs d'étanchéité statique 85 sont comprimés par la fixation des vis de fixation 106, 108 aux buses de distribution 6.

La face de base 116 comprend un orifice 114 dans lequel la goupille 112 d'aide au montage est insérée, comme visible sur les figures 7, 14 et 15.

Une partie médiane 117 de la face inférieure 118 du raccord, illustrée sur la figure 15, comprend deux reliefs de positionnement. Ces reliefs de positionnement facilitent le positionnement et le maintien en position du raccord 46, 47 par rapport à la platine de support 12, lors du montage du dispositif de distribution 2.

Dans le mode de réalisation représenté, chaque relief de positionnement, visible sur la figure 6, est constitué par un orifice 134 et par une goupille 136 montée en partie dans l'orifice 134. La platine de support 12 comporte des reliefs de positionnement complémentaires constitués par des orifices 138 recevant l'autre partie de chaque goupille 136.

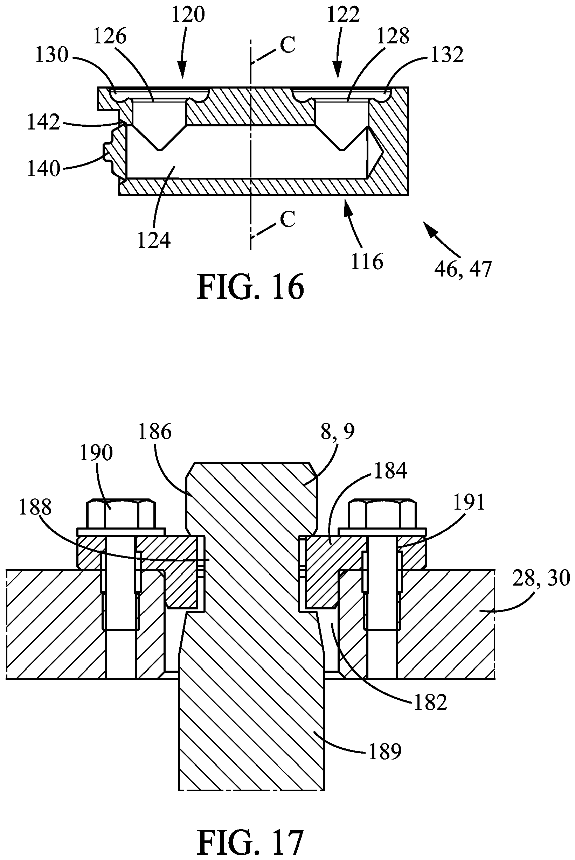

La conduite 124 présente une forme générale en U, illustrée sur la figure 16.

Lorsque le raccord 46, 47 est réalisé dans un mélange d'acier inoxydable de type 316L, le raccord 46, 47 comporte un bouchon 140 fixé, par exemple par soudure, sur une ouverture supplémentaire 142 de la conduite. Cette ouverture supplémentaire 142 est disposée sur une face latérale du raccord. Cette ouverture supplémentaire 142 n'est réalisée que pour des raisons liées à la fabrication de la conduite.

En variante, le raccord 46, 47 est réalisé en élastomère. Dans ce cas, le raccord 46, 47 ne comporte pas de bouchon.

La partie supérieure des buses de distribution 6, 7 est emmanchée dans les orifices 14 de la platine de support 12.

Comme visible sur les figures 5 et 6, la face supérieure des buses de distribution 6, 7 comprend deux trous taraudés 146, 148 qui s'étendent parallèlement à l'axe principal B-B. Les vis de fixation 106, 108 sont vissées dans les trous taraudés 146, 148.

La face extérieure périphérique supérieure 150 du corps de buse comprend une gorge 152 dans laquelle un joint d'étanchéité 154 est monté, et un épaulement 156 en butée contre un épaulement complémentaire 158 réalisé dans les orifices 14 de la platine de support.

Le trou central 17 du corps de buse comprend une portion supérieure élargie 162 dans laquelle l'extension 74 du premier bloc de guidage est logée. Un épaulement 164 jouxte cette portion élargie 162. L'extension 74 du premier bloc de guidage est en appui sur cet épaulement 164.

Avantageusement, cet épaulement 164 est pourvu d'une gorge 168 dans laquelle une partie du dispositif d'étanchéité statique 88 est logée. L'autre partie de ce dispositif d'étanchéité statique 88 est disposée dans la gorge 86 de la face inférieure de l'extension du premier bloc de guidage. Comme dit précédemment, les vis de fixation 106, 108 reliant le premier bloc de guidage 44 à la buse de distribution 6 compriment ce dispositif d'étanchéité statique 88.

Comme visible sur la figure 7, la deuxième face d'application 82 du premier bloc de guidage 44 est en appui sur une partie d'extrémité 120 de la face de base d'un raccord 46. La première face d'application 80 du même premier bloc de guidage 44 est en appui sur une partie d'extrémité 122 de la face de base d'un raccord additionnel 47. La partie médiane 117 des raccords 46, 47 repose sur la platine de support 12. La partie d'extrémité 120 du raccord 46 ainsi que la partie d'extrémité 122 du raccord additionnel 47 reposent sur la buse de distribution 6 montée sous le premier bloc de guidage 44. La partie d'extrémité 122 de l'extrémité opposée du raccord additionnel 47 repose sur la buse de distribution voisine 7 disposée sous le deuxième bloc de guidage 45.

Ainsi, la partie d'extrémité 122 du raccord additionnel 47 est coincée entre le premier bloc de guidage 44, la buse de distribution 6 et la platine de support 12. L'autre partie d'extrémité 120 du raccord additionnel 47 est coincée entre le premier bloc de guidage 44, la buse de distribution voisine 7 et la platine de support 12.

La partie inférieure 170 du cops de buse est emmanchée dans des orifices 172 pratiqués dans la platine de propreté 40. La face extérieure inférieure du corps de buse 16 comprend une gorge 174 dans laquelle un dispositif d'étanchéité statique 176 siège. La platine de propreté 40 comporte des rainures circulaires 178 bordant chacune un orifice 172. Un joint d'étanchéité 180 est monté dans chaque rainure circulaire 178.

Avantageusement, chaque bloc de guidage 44, 45 peut être démonté indépendamment des autres blocs de guidage lors de détection d'une fuite au niveau d'un seul bloc de guidage. Avantageusement, chaque bloc de guidage 44, 45 peut être démonté par le seul démontage de deux vis de fixation 106, 108. Enfin, le démontage d'un bloc de guidage 44, 45 permet d'accéder facilement aux dispositifs d'étanchéité dynamique du trou de guidage, au dispositif d'étanchéité statique disposé entre le bloc de guidage et la buse de distribution et aux dispositifs d'étanchéité statique disposés entre le bloc de guidage, le raccord et le raccord additionnel.

En référence à la figure 17, les platines porte-obturateurs 28, 30 comportent, chacune, deux rangées de trous 182 dans lesquels les obturateurs 8, 9 sont fixés de manière amovible à l'aide de cales de fixation 184.

A cet effet, chaque obturateur 8, 9 comprend une portion supérieure 186 de tige, une gorge 188 réceptionnant une partie d'une cale de fixation 184, et une portion inférieure 189 de tige séparée de la portion supérieure 186 de tige par la gorge 188. Les cales de fixation 184 sont par ailleurs fixées aux platines porte-obturateurs 28, 30 par des vis 190 vissées dans des trous 191.

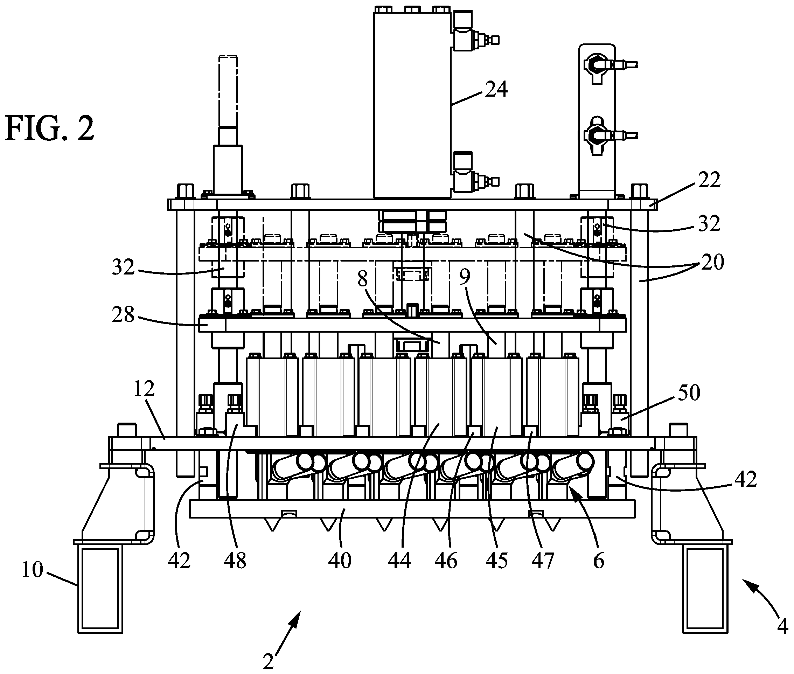

Pour faciliter le démontage des obturateurs 8, 9 le diamètre de la portion supérieure 186 est inférieur ou égal au diamètre de la portion inférieure 189 de la tige. Ainsi, pour démonter un ou plusieurs obturateurs 8, 9, la platine porte-obturateurs 28, 30 est disposée en position haute telle qu'illustrée en pointillés sur la figure 2. Les vis 190 sont dévissées pour écarter les cales de fixation 184 de l'obturateur 8. En conséquence, l'obturateur 8 coulisse librement au travers du trou 182 de la platine porte-obturateurs, puis du trou de guidage 52 du bloc de guidage et enfin du trou central 17 du corps de buse. Ainsi, les obturateurs 8, 9 peuvent être facilement extraits par le dessous de la platine de propreté 40.

Avantageusement, les blocs de guidage 44, 45 peuvent être utilisés dans des dispositifs de distribution comportant un entraxe différent c'est-à-dire une distance différente entre un premier ensemble obturateur 8, bloc de guidage 44 et buse de distribution 6 et un deuxième ensemble obturateur 9, bloc de guidage 45 et buse de distribution 7. Dans ce cas, les raccords 46, 47 utilisés dans les deux dispositifs de distribution présentent des tailles différentes.

En variante, le raccord est constitué par un tuyau propre à se connecter à une première face d'application d'un premier bloc de guidage et à une deuxième face d'application d'un deuxième bloc de guidage.

En variante, les raccords ne sont pas coincés sous une partie des blocs de guidage mais sont disposés sur une face supérieure des blocs de guidage.

En variante, les éléments de fixation 102, 104, 106, 108 comprennent un trou et un cône.

En variante, seul l'épaulement intérieur 164 du corps de buse est muni d'une gorge 168. Selon une autre variante, seule la face d'extrémité inférieure 84 du premier bloc de guidage est munie d'une gorge.

## Revendications

1. Dispositif de distribution (2) de produit apte à l'écoulement, ledit dispositif de distribution (2) comprenant :
- un châssis (4) comprenant une platine de support (12) ; et
- au moins un premier (8) et un deuxième (9) obturateurs portés par le châssis (4), le premier (8) et le deuxième (9) obturateurs étant propres à autoriser ou interdire l'écoulement du produit ;
- un premier bloc de guidage (44) porté par la platine de support (12), ledit premier bloc de guidage (44) comportant un trou de guidage (52) apte à guider le premier obturateur (8),
- un deuxième bloc de guidage (45) porté par la platine de support (12), ledit deuxième bloc de guidage (45) étant isolé du premier bloc de guidage (44), le deuxième bloc de guidage (45) comportant un trou de guidage (52) apte à guider le deuxième obturateur (9), **caractérisé en ce que**
le premier boc de guidage (44) comporte en outre un canal (41) de passage d'un fluide d'entretien communicant avec le trou de guidage (52),
le deuxième bloc de guidage (45) comportant un canal (43) de passage du fluide d'entretien,
et **en ce que** le dispositif de distribution comporte en outre un raccord (46) porté par la platine de support (12), ledit raccord (46) étant apte à connecter de manière étanche le canal (41) du premier bloc de guidage au canal (43) du deuxième bloc de guidage pour permettre le passage du fluide d'entretien.

2. Dispositif de distribution (2) selon la revendication 1, dans lequel le canal (41) du premier bloc de guidage (44) débouche sur une face, dite face d'application (72), qui s'étend dans un plan sensiblement parallèlement à la platine de support (12).

3. Dispositif de distribution (2) selon l'une quelconque des revendications 1 et 2, dans lequel au moins une partie du premier bloc de guidage (44) est en appui sur au moins une partie (120) d'une face de base (116) du raccord (46), ledit raccord (46) comportant une conduite (124) ayant une première ouverture (126) qui débouche sur ladite au moins une partie (120) de la face de base (116).

4. Dispositif de distribution (2) selon la revendication 3, qui comporte un raccord additionnel (47) ayant une face de base (116) ; l'autre partie du premier bloc de guidage (44) étant en appui sur au moins une partie (122) de la face de base (116) du raccord additionnel, ladite conduite (124) ayant une deuxième ouverture (128) qui débouche sur ladite au moins une partie (122) de la face de base (116) dudit raccord additionnel.

5. Dispositif de distribution (2) selon l'une quelconque des revendications 1 à 4, qui comporte au moins une première (6) et une deuxième (7) buses de distribution portées par la platine de support (12), chaque buse de distribution (6, 7) comportant un corps de buse (16) propre à distribuer le produit et un canal d'admission (18) raccordé au corps de buse (16) ;
et dans lequel la platine de support (12) comporte des orifices (14) munis d'un épaulement (158), la première (6) et la deuxième (7) buses de distribution étant emmanchées dans lesdits orifices (14), et
le premier bloc de guidage (44) étant fixé à la première buse de distribution (6) par au moins un élément de fixation (102, 104, 106, 108) ; la première buse de distribution (6) étant en butée contre ledit épaulement (158) de la platine de support ; le raccord (46) étant coincé entre le premier bloc de guidage (44), la première buse de distribution (6) et la platine de support (12).

6. Dispositif de distribution (2) selon la combinaison des revendications 3 et 5, qui comprend au moins un dispositif d'étanchéité (85) interposé entre le raccord (46) et le premier bloc de guidage (44), et dans lequel au moins une face parmi la face du bloc de guidage en appui sur le raccord (72) et la face de base (116), comprend une rainure circulaire (86, 130, 132) dans laquelle ledit dispositif d'étanchéité (85) siège, le dispositif d'étanchéité (85) étant comprimé par ledit au moins un élément de fixation (102, 104, 16, 108).

7. Dispositif de distribution (2) selon la combinaison des revendications 2 et 5, qui comprend deux éléments de fixation (102, 104, 106, 108) du premier bloc de guidage (44) à la première buse de distribution (6), et dans lequel le canal (41) du premier bloc de guidage (44) comporte une voie d'amenée (90) et une voie d'évacuation (92) qui débouchent, de part et d'autre, du trou de guidage (52), le long d'une diagonale (D1) de la face d'application (72), et dans lequel les deux éléments de fixation (102, 104, 106, 108) sont disposés, de part et d'autre, du trou de guidage (52), le long d'une deuxième diagonale (D2) de ladite face d'application (72).

8. Dispositif de distribution (2) selon l'une quelconque des revendications 1 à 7, dans lequel chaque obturateur (8, 9) comprend au moins une portion supérieure (186), une gorge (188) destinée à recevoir une cale de fixation (184), et une portion inférieure (189) séparée de la portion supérieure (186) par ladite gorge (188), et dans lequel le diamètre de la portion supérieure (186) est inférieur ou égal au diamètre de la portion inférieure (189).

9. Dispositif de distribution (2) selon l'une quelconque des revendications 5 à 8, qui comporte un dispositif d'étanchéité statique (88) agencé entre le premier bloc de guidage (44) et la première buse de distribution (6) et dans lequel le corps de buse (16) comporte un orifice central (17) muni d'un épaulement intérieure (164), le premier bloc de guidage (44) comprenant une face d'extrémité inférieure (84) en appui sur ledit épaulement intérieur (164), et dans lequel au moins une face parmi une face de l'épaulement intérieur (164) et la face d'extrémité inférieure (84), est pourvue d'une gorge (86, 168), le dispositif d'étanchéité statique (88) siégeant dans ladite gorge (86, 168).

10. Dispositif de distribution (2) selon l'une quelconque des revendications 1 à 9, dans lequel le premier bloc de guidage (44) est identique au deuxième bloc de guidage (45).

11. Dispositif de distribution (2) selon l'une quelconque des revendications 1 à 10, dans lequel le raccord (46) comporte un passage de fluide ayant une forme générale en U.

12. Dispositif de distribution (2) selon l'une quelconque des revendications 1 à 11, dans lequel le raccord (46) est réalisé en élastomère.

13. Dispositif de distribution (2) selon l'une quelconque des revendications 1 à 12, dans lequel lesdits trous de guidage (52) s'étendent selon un axe principal (B-B) et dans lequel ledit canal (41) comporte au moins une section (94, 98) s'étendant parallèlement à l'axe principal (B-B) et une section (96, 100) s'étendant selon une direction faisant un angle prédéfini (α, θ) avec ledit axe principal (B-B) ; ledit angle prédéfini (α, θ) étant compris entre 55° et 85°.

14. Dispositif de distribution (2) selon l'une quelconque des revendications 1 à 13, dans lequel ledit trou de guidage (52) du premier bloc de guidage (44) comprend au moins un resserrement (54, 56) pourvu d'une gorge (60, 62), et dans lequel le premier bloc de guidage (44) comporte au moins un dispositif d'étanchéité dynamique (64, 66) agencé dans ladite gorge (60, 62) et propre à assurer l'étanchéité entre le premier obturateur (6) et le premier bloc de guidage (44).

15. Dispositif de distribution (2) selon l'une quelconque des revendications 1 à 14, dans lequel les obturateurs (8, 9) sont agencés selon 2n rangées (36) avec n entier naturel supérieur à 1, les obturateurs (8, 9) de n rangée(s) (36) étant déplacés par un premier actionneur (24) et les obturateurs (8, 9) des n rangées suivantes (36) étant déplacés par un autre actionneur (26) indépendant dudit premier actionneur (24).

16. Ensemble de dispositifs de distribution (2) **caractérisé en ce qu'**il comporte au moins un premier dispositif de distribution (2) et un deuxième dispositif de distribution conformés selon l'une quelconque des revendications 1 à 15, dans lequel l'entraxe entre les obturateurs (8, 9) du premier dispositif de distribution (2) est différent de l'entraxe entre les obturateurs du deuxième dispositif de distribution et dans lequel les blocs de guidage (44, 45) du premier dispositif de distribution (2) sont identiques aux blocs de guidage du deuxième dispositif de distribution.

## Patentansprüche

1. Verteilungsvorrichtung (2) für ein strömungsfähiges Produkt, wobei die Verteilungsvorrichtung (2) umfasst:
- ein Gestell (4), das eine Trägerplatte (12) umfasst; und
- mindestens einen ersten (8) und einen zweiten (9) Verschluss, die von dem Gestell (4) getragen werden, wobei der erste (8) und der zweite (9) Verschluss dafür ausgelegt sind, das Ausströmen des Produktes zu gestatten oder zu untersagen;
- einen ersten Führungsblock (44), der durch die Trägerplatte (12) getragen wird, wobei der erste Führungsblock (44) ein Führungsloch (52) umfasst, das dazu ausgelegt ist, den ersten Verschluss (8) zu führen,
- einen zweiten Führungsblock (45), der durch die Trägerplatte (12) getragen wird, wobei der zweite Führungsblock (45) von dem ersten Führungsblock (44) isoliert ist und der zweite Führungsblock (45) ein Führungsloch (52) umfasst, das dazu ausgelegt ist, den zweiten Verschluss (9) zu führen, **dadurch gekennzeichnet, dass**
der erste Führungsblock (44) ferner einen Kanal (41) für den Durchfluss einer Wartungsflüssigkeit umfasst, der mit dem Führungsloch (52) in Verbindung steht,
der zweite Führungsblock (45) einen Kanal (43) für den Durchfluss einer Wartungsflüssigkeit umfasst,
und dadurch, dass die Verteilungsvorrichtung ferner einen Anschluss (46) umfasst, der durch die Trägerplatte (12) getragen wird, wobei der Anschluss (46) dazu ausgelegt ist, den Kanal (41) des ersten Führungsblocks dicht mit dem Kanal (43) des zweiten Führungsblocks zu verbinden, um den Durchfluss der Wartungsflüssigkeit zu gestatten.

2. Verteilungsvorrichtung (2) nach Anspruch 1, bei der der Kanal (41) des ersten Führungsblocks (44) auf eine Fläche mündet, die als Auftragungsfläche (72) bezeichnet wird und die sich in einer Ebene erstreckt, die im Wesentlichen parallel zu der Trägerplatte (12) verläuft.

3. Verteilungsvorrichtung (2) nach Anspruch 1 oder 2, bei der zumindest ein Teil des ersten Führungsblocks (44) an zumindest einem Teil (120) einer Basisfläche (116) des Anschlusses (46) anliegt, wobei der Anschluss (46) eine Leitung (124) umfasst, die eine erste Öffnung (126) aufweist, die auf den zumindest einen Teil (120) der Basisfläche (116) mündet.

4. Verteilungsvorrichtung (2) nach Anspruch 3, die einen zusätzlichen Anschluss (47) umfasst, der eine Basisfläche (116) aufweist; der andere Teil des ersten Führungsblocks (44) liegt dabei an zumindest einem Teil (122) der Basisfläche (116) des zusätzlichen Anschlusses an, wobei die Leitung (124) eine zweite Öffnung (128) aufweist, die auf den zumindest einen Teil (122) der Basisfläche (116) des zusätzlichen Anschlusses mündet.

5. Verteilungsvorrichtung (2) nach einem der Ansprüche 1 bis 4, die mindestens eine erste (6) und eine zweite (7) Verteilerdüse umfasst, die durch die Trägerplatte (12) getragen werden, wobei jede Verteilerdüse (6, 7) einen Düsenkörper (16), der dazu ausgelegt ist, das Produkt zu verteilen, und einen Einlasskanal (18), der an den Düsenkörper (16) angeschlossen ist, umfasst;
und bei der die Trägerplatte (12) Öffnungen (14) umfasst, die ausgestattet sind mit einer Schulter (158), wobei die erste (6) und die zweite (7) Verteilerdüse in die Öffnungen (14) gepresst werden, und
wobei der erste Führungsblock (44) an der ersten Verteilerdüse (6) durch mindestens ein Befestigungselement (102, 104, 106, 108) befestigt ist; die erste Verteilerdüse (6) an die Schulter (158) der Trägerplatte anstößt; und der Anschluss (46) zwischen dem ersten Führungsblock (44), der ersten Verteilerdüse (6) und der Trägerplatte (12) eingeklemmt ist.

6. Verteilungsvorrichtung (2) nach einer Kombination der Ansprüche 3 und 5, die mindestens eine Dichtungsvorrichtung (85) umfasst, die zwischen dem Anschluss (46) und dem ersten Führungsblock (44) angeordnet ist und bei der zumindest eine Fläche, auszuwählen aus der Fläche des Führungsblocks, die an dem Anschluss (72) anliegt, und der Basisfläche (116), eine umlaufende Nut (86, 130, 132) umfasst, in der die Dichtungsvorrichtung (85) sitzt, wobei die Dichtungsvorrichtung (85) von dem mindestens einen Befestigungselement (102, 104, 16, 108) zusammengedrückt wird.

7. Verteilungsvorrichtung (2) nach einer Kombination der Ansprüche 2 und 5, die zwei Befestigungselemente (102, 104, 106, 108) des ersten Führungsblocks (44) an die erste Verteilerdüse (6) umfasst und bei der der Kanal (41) des ersten Führungsblocks (44) eine Zuführspur (90) und eine Abführspur (92) umfasst, die beiderseits des Führungslochs (52) entlang einer Diagonale (D1) der Auftragungsfläche (72) herauskommen, und bei der die zwei Befestigungselemente (102, 104, 106, 108) beiderseits des Führungslochs (52) entlang einer zweiten Diagonale (D2) der Auftragungsfläche (72) angeordnet sind.

8. Verteilungsvorrichtung (2) nach einem der Ansprüche 1 bis 7, in der jeder Verschluss (8, 9) mindestens einen oberen Abschnitt (186), eine Nut (188), die zur Aufnahme eines Befestigungskeils (184) bestimmt ist, und einen unteren Abschnitt (189), der von dem oberen Abschnitt (186) durch die Nut (188) getrennt ist, umfasst, und bei der der Durchmesser des oberen Abschnitts (186) kleiner oder gleich dem Durchmesser des unteren Abschnitts (189) ist.

9. Verteilungsvorrichtung (2) nach einem der Ansprüche 5 bis 8, die eine statische Dichtungsvorrichtung (88) umfasst, die zwischen dem ersten Führungsblock (44) und der ersten Verteilerdüse (6) angeordnet ist, und bei der der Düsenkörper (16) eine zentrale Öffnung (17) umfasst, die mit einer inneren Schulter (164) versehen ist, wobei der erste Führungsblock (44) eine untere Stirnfläche (84) umfasst, die an der inneren Schulter (164) anliegt, und in der mindestens eine Fläche, auszuwählen aus der Fläche der inneren Schulter (164) und der unteren Stirnfläche (84), mit einer Nut (86, 168) versehen ist, wobei die statische Dichtungsvorrichtung (88) in der Nut (86, 168) sitzt.

10. Verteilungsvorrichtung (2) nach einem der Ansprüche 1 bis 9, bei der der erste Führungsblock (44) identisch mit dem zweiten Führungsblock (45) ist.

11. Verteilungsvorrichtung (2) nach einem der Ansprüche 1 bis 10, bei der der Anschluss (46) einen Flüssigkeitsdurchgang umfasst, der die allgemeine Form eines U aufweist.

12. Verteilungsvorrichtung (2) nach einem der Ansprüche 1 bis 11, bei der der Anschluss (46) aus Elastomeren besteht.

13. Verteilungsvorrichtung (2) nach einem der Ansprüche 1 bis 12, bei der sich die Führungslöcher (52) entlang einer Hauptachse (B-B) erstrecken und bei der der Kanal (41) mindestens einen Abschnitt (94, 98) umfasst, der sich parallel zu der Hauptachse (B-B) erstreckt und einen Abschnitt (96, 100), der sich in einer Richtung erstreckt, die einen vorgegebenen Winkel (α, θ) mit der Hauptachse (B-B) bildet; hierbei liegt der vorgegebene Winkel (α, θ) zwischen 55° und 85°.

14. Verteilungsvorrichtung (2) nach einem der Ansprüche 1 bis 13, bei der das Führungsloch (52) des ersten Führungsblocks (44) mindestens eine Verengung (54, 56) aufweist, die mit einer Nut (60, 62) versehen ist, und bei der der erste Führungsblock (44) mindestens eine dynamische Dichtungsvorrichtung (64, 66) umfasst, die in der Nut (60, 62) angeordnet ist und dazu ausgelegt ist, die Dichtigkeit zwischen dem ersten Verschluss (6) und dem ersten Führungsblock (44) zu gewährleisten.

15. Verteilungsvorrichtung (2) nach einem der Ansprüche 1 bis 14, bei der die Verschlüsse (8, 9) in 2n Reihen (36) angeordnet sind, wobei n eine natürliche Zahl größer als 1 ist, und wobei die Verschlüsse (8, 9) von n Reihe(n) (36) durch ein erstes Betätigungsgerät (24) verschoben werden und die Verschlüsse (8, 9) der folgenden n Reihen (36) durch ein anderes Betätigungsgerät (26) verschoben werden, das von dem ersten Betätigungsgerät (24) unabhängig ist.

16. Einheit, die aus Verteilungsvorrichtungen (2) besteht, **dadurch gekennzeichnet, dass** sie mindestens eine erste Verteilungsvorrichtung (2) und eine zweite Verteilungsvorrichtung umfasst, die einem der Ansprüche 1 bis 15 entsprechen, und bei der Achsabstand zwischen den Verschlüssen (8, 9) der ersten Verteilungsvorrichtung (2) verschieden von dem Achsabstand zwischen den Verschlüssen der zweiten Verteilungsvorrichtung ist und bei der die Führungsblöcke (44, 45) der ersten Verteilungsvorrichtung (2) identisch mit den Führungsblöcken der zweiten Verteilungsvorrichtung sind.

## Claims

1. Dispensing device (2) for flowable product, said dispensing device (2) comprising:
- a frame (4) comprising a support plate (12); and
- at least a first (8) and second (9) plugs carried by the frame (4), the first (8) and second (9) plugs being adapted to allow or prevent the flow of product;
- a first guide block (44) supported by the support plate (12), said first guide block (44) comprising a guide hole (52) adapted to guide the first plug (8);
- a second guide block (45) supported by the support plate (12), said second guide block (45) being isolated from the first guide block (44), the second guide block (45) having a guide hole (52) adapted to guide the second plug (9), **characterized in that** the first guide block (44) comprises a channel (41) in communication with the guide hole (52), that allows the passage of a maintenance fluid, the second guide block (45) comprising a channel (43) for the passage of maintenance fluid, **in that** the dispensing device further comprises:
- a coupling (46) supported by the support plate (12), said coupling (46) being adapted to connect in a fluidtight manner the channel (41) of the first guide block to the channel (43) of the second guide block, in order to allow the passage of maintenance fluid.

2. Dispensing device (2) according to claim 1, wherein the channel (41) of the first guide block (44) opens onto one face, referred to as the contact face (72), which lies in a plane substantially parallel to the support plate (12).

3. Dispensing device (2) according to any of the claims 1 and 2, wherein at least a portion of the first guide block (44) rests on at least a portion (120) of a base face (116) of the coupling (46), said coupling (46) comprising a channel (124) having a first opening (126) which opens onto said at least a portion (120) of the base face (116).

4. Dispensing device (2) according to claim 3, comprising an additional coupling (47) having a base face (116); the other portion of the first guide block (44) resting on at least a portion (122) of the base face (116) of the additional coupling, said channel (124) having a second opening (128) which opens onto said at least a portion (122) of the base face (116) of said additional coupling.

5. Dispensing device (2) according to any of the claims 1 to 4, which comprises at least a first (6) and second (7) dispensing nozzles supported by the support plate (12), each dispensing nozzle (6, 7) having a nozzle body (16) adapted to dispense the product and an entry channel (18) coupled to the nozzle body (16);
and wherein the support plate (12) comprises openings (14) provided with a shoulder (158), the first (6) and second (7) dispensing nozzles being fitted into said openings (14), and
the first guide block (44) being secured to the first dispensing nozzle (6) by at least one fastening element (102, 104, 106, 108); the first dispensing nozzle (6) abutting against said shoulder (158) of the support plate; the coupling (46) being wedged between the first guide block (44), the first dispensing nozzle (6), and the support plate (12).

6. Dispensing device (2) according to the combination of claims 3 and 5, which comprises at least one sealing device (85) interposed between the coupling (46) and the first guide block (44), and wherein at least one face among the face of the guide block resting against the coupling (72) and the base face (116), comprises a circular groove (86, 130, 132) in which said seal (85) is seated, the sealing device (85) being compressed by said at least one fastening element (102, 104, 16, 108).

7. Dispensing device (2) according to the combination of claims 2 and 5, which comprises two fastening elements (102, 104, 106, 108) fastening the first guide block (44) to the first dispensing nozzle (6), and wherein the channel (41) of the first guide block (44) comprises a delivery path (90) and a discharge path (92) which open onto the guide hole (52), one on either side of said hole along a diagonal (D1) of the contact face (72), and wherein the two fastening elements (102, 104, 106, 108) are arranged one on either side of the guide hole (52), along a second diagonal (D2) of said contact face (72).

8. Dispensing device (2) according to any of the claims 1 to 7, wherein each plug (8, 9) comprises at least an upper portion (186), a groove (188) for receiving a fastening wedge (184), and a lower portion (189) separated from the upper portion (186) by said groove (188), and wherein the diameter of the upper portion (186) is less than or equal to the diameter of the lower portion (189).

9. Dispensing device (2) according to any of the claims 5 to 8, which comprises a static sealing device (88) arranged between the first guide block (44) and the first dispensing nozzle (6), and wherein the nozzle body (16) comprises a central hole (17) provided with an internal shoulder (164), the first guide block (44) comprising a lower end face (84) resting against said internal shoulder (164), and wherein at least one face among a face of the internal shoulder (164) and the lower end face (84) is provided with a groove (86, 168), the static sealing device (88) being seated in said groove (86, 168).

10. Dispensing device (2) according to any of the claims 1 to 9, wherein the first guide block (44) is identical to the second guide block (45).

11. Dispensing device (2) according to any of the claims 1 to 10, wherein the coupling (46) comprises a passageway for fluid that is generally U-shaped.

12. Dispensing device (2) according to any of the claims 1 to 11, wherein the coupling (46) is made of elastomer.

13. Dispensing device (2) according to any of the claims 1 to 12, wherein said guide holes (52) extend along a main axis (B-B) and wherein said channel (41) comprises at least a section (94, 98) extending parallel to the main axis (B-B) and a section (96, 100) extending in a direction forming a predetermined angle (α, θ) with said main axis (B-B); said predetermined angle (α, θ) being between 55° and 85°.

14. Dispensing device (2) according to any of the claims 1 to 13, wherein said guide hole (52) of the first guide block (44) comprises at least one constriction (54, 56) provided with a groove (60, 62), and wherein the first guide block (44) comprises at least one dynamic sealing device (64, 66) arranged in said groove (60, 62) and adapted to establish fluidtightness between the first plug (6) and the first guide block (44).

15. Dispensing device (2) according to any of the claims 1 to 14, wherein the plugs (8, 9) are arranged in 2n rows (36) where n is an integer greater than 1, the plugs (8, 9) of n row(s) (36) being moved by a first actuator (24) and the plugs (8, 9) of the next n rows (36) being moved by another actuator (26) independent of said first actuator (24).

16. Set of dispensing devices (2), **characterized in that** it comprises at least a first dispensing device (2) and second dispensing device according to any of the claims 1 to 15, wherein the center-to-center distance between the plugs (8, 9) of the first dispensing device (2) is different from the center-to-center distance between the plugs of the second dispensing device and wherein the guide blocks (44, 45) of the first dispensing device (2) are identical to the guide blocks of the second dispensing device.
